# FASCICULE DE BREVET EUROPEEN

(11) **EP 1 791 238 B1**
(45) Date de publication et mention de la délivrance du brevet: **29.06.2011**
(21) Numéro de dépôt: 06301161.3
(22) Date de dépôt: 21.11.2006
(51) Int. Cl.: H02J 7/14, H02P 9/48

(54) **Dispositif de production d'électricité pour alternateur à vitesse variable**
Anlage zur Elektrizitätserzeugung für einen Generator mit variabler Geschwindigkeit
Electricity producing device for variable speed alternator

(30) Priorité: 23.11.2005 FR 0553573
(43) Date de publication de la demande: 30.05.2007
(73) Titulaire: MOTEURS LEROY-SOMER, 16000 Angoulême (FR)
(72) Inventeur: Andrieux, Christian, 16000, Angouleme (FR)
(74) Mandataire: Tanty, François

(56) Documents cités:
- DE-A1- 2 118 703
- DE-A1- 3 432 127
- DE-A1- 19 931 010
- US-A- 4 024 456
- US-A- 4 197 492
- US-A1- 6 005 786

## Description

La présente invention concerne la production d'électricité.

On connaît par les publications US 4 024 456, US 4 197 492, DE 3 432 127 et DE 2 118 703 des dispositifs comportant un alternateur et des redresseurs débitant sur une batterie.

On connaît par la demande DE 199 31 010 un dispositif de redressement de la puissance électrique délivrée par un alternateur en fonction de la vitesse de l'alternateur.

L'invention concerne plus particulièrement mais non exclusivement la production d'électricité à partir d'un ensemble embarqué comportant un moteur thermique et un dispositif de production d'électricité ayant un alternateur entraîné par ce moteur thermique.

Il s'agit par exemple d'un système de réfrigération de camion ou de climatisation de bus, alimenté par un dispositif de production d'électricité dont l'alternateur est entraîné par le moteur diesel du camion ou du bus servant à sa propulsion.

Pour un tel système de réfrigération ou de climatisation, la vitesse de l'alternateur varie d'une manière relativement importante en fonction du régime du moteur thermique, par exemple d'un facteur 1 à 5, ce qui s'accompagne d'une variation de la tension délivrée par l'alternateur.

Il existe un besoin pour réduire l'amplitude de la plage de variation de la tension, afin par exemple de faciliter l'alimentation du système de réfrigération ou de climatisation et réduire le coût du dispositif de production d'électricité.

L'invention vise notamment à répondre à ce besoin grâce à un dispositif de production d'électricité tel que revendiqué dans la revendication 1 et grâce à un procédé d'alimentation d'un moteur tel que revendiqué dans la revendication 18. Des exemples de mises en oeuvre sont plus particulièrement décrits dans les revendications dépendantes. Dans des exemples mise en oeuvre, le dispositif comporte : :
- un premier redresseur ayant des entrées et une sortie,
- un deuxième redresseur ayant des entrées et une sortie, les entrées des premier et deuxième redresseurs étant à relier à un alternateur de telle sorte que les phases de l'alternateur soient reliées en série avec les entrées des premier et deuxième redresseurs,
- au moins un interrupteur pour court-circuiter une partie au moins des entrées du second redresseur,
- un dispositif de contrôle pour commander la commutation du ou des interrupteurs de façon à réguler la tension redressée délivrée par le dispositif. La régulation peut s'effectuer ou non en fonction de la vitesse de rotation de l'alternateur.

Dans des exemples de mise en oeuvre de l'invention, les sorties des premier et deuxième redresseurs sont reliées en parallèle.

Dans d'autres exemples, le ou les interrupteurs sont agencés pour court-circuiter des entrées du deuxième redresseur.

Le dispositif de contrôle peut agir sur la tension redressée délivrée par le dispositif de manière à réduire l'amplitude de la plage de variation de la tension, la régulation de la tension pouvant être relativement grossière ou plus fine, selon l'utilisation.

Le dispositif peut comporter ou non l'alternateur générant des tensions alternatives. Lorsque le dispositif comporte l'alternateur, les premier et deuxième redresseurs peuvent être livrés à l'utilisateur déjà connectés à l'alternateur.

Le ou chaque interrupteur peut comporter un ou plusieurs composants électroniques. Le ou chaque interrupteur peut être réalisé par tout moyen adapté et par exemple à l'aide d'un ou plusieurs interrupteurs électromécaniques ou à semi-conducteurs, par exemple à contacteur(s), relai(s), thyristor(s), triac(s), IGBT ou transistor(s) bipolaire(s).

Le dispositif peut alimenter un moteur utilisant l'énergie électrique produite par l'alternateur, par exemple un moteur de compresseur ou de ventilateur. Ce moteur peut être directement relié à la sortie de l'un au moins des redresseurs, sans batterie intermédiaire.

L'invention peut permettre d'alimenter relativement facilement le ou les moteurs et/ou autres appareils utilisant l'énergie électrique produite par l'alternateur.

L'invention permet par exemple de délivrer une tension redressée dont l'amplitude de la plage de variation est plus faible qu'en l'absence du dispositif, l'amplitude de la plage de variation de tension étant par exemple comprise entre 300 et 510 V lorsque la vitesse de rotation de l'alternateur varie entre 1000 tr/min et 3500 tr/min.

Le dispositif de contrôle peut être agencé de manière à ce que la régulation de la tension redressée s'effectue autour d'une valeur de consigne, laquelle peut être prédéfinie ou réglable par l'utilisateur.

Dans un exemple de mise en oeuvre de l'invention, le dispositif comporte un interrupteur électronique par phase de l'alternateur, chaque interrupteur étant monté en série entre un point neutre et une entrée du deuxième redresseur.

Les interrupteurs électroniques peuvent comporter des triacs ou autres interrupteurs bidirectionnels commandables.

Les interrupteurs électroniques peuvent être commandés de manière à court-circuiter cycliquement deux des entrées du deuxième redresseur.

Le dispositif de contrôle peut être agencé pour commander l'angle de fermeture des interrupteurs électroniques en fonction de l'angle électrique d'une des tensions aux bornes d'une phase de l'alternateur.

Le dispositif de contrôle peut comporter une boucle à verrouillage de phase.

L'invention a encore pour objet, selon un autre de ses aspects, un dispositif de production d'électricité comportant :
- un système de redressement pour délivrer une tension redressée à partir d'un alternateur,
- un système de commutation agencé pour :
   - dans un premier état, permettre au système de redressement de redresser des tensions aux bornes des phases de l'alternateur,
   - dans un deuxième état, permettre au système de redressement de redresser des tensions interphases.

Dans le premier état du système de commutation, la tension délivrée par le dispositif de production d'électricité peut être par exemple d'amplitude sensiblement égale à la tension crête par phase de l'alternateur, tandis que dans le deuxième état, la tension redressée peut être par exemple d'amplitude sensiblement égale à la tension crête entre phases de l'alternateur.

Le rapport entre ces tensions redressées est par exemple de 3^{½} dans le cas d'un alternateur triphasé.

Le système de commutation peut être agencé de façon à changer automatiquement d'état en fonction de la vitesse d'entraînement de l'alternateur.

Le système de commutation comporte par exemple un dispositif de contrôle agencé pour comparer une information représentative de la vitesse d'entraînement de l'alternateur à au moins une valeur de consigne, afin de changer éventuellement d'état en fonction du résultat de la comparaison.

Le système de commutation comporte par exemple un dispositif de contrôle agencé pour comparer une information représentative de la vitesse d'entraînement de l'alternateur à au moins un seuil bas et à un seuil haut, afin de créer une hystérésis.

Le système de commutation peut également être agencé de façon à changer automatiquement d'état en fonction de la tension redressée.

Le système de commutation comporte par exemple un dispositif de contrôle agencé pour comparer une information représentative de la tension redressée à au moins une valeur de consigne, afin de changer éventuellement d'état en fonction du résultat de la comparaison.

Le système de commutation comporte par exemple un dispositif de contrôle agencé pour comparer une information représentative de la tension redressée à au moins un seuil bas et à un seuil haut, afin de créer une hystérésis.

Dans des exemples de mise en oeuvre de l'invention, le système de redressement comporte un premier et un deuxième redresseur, ayant chacun autant d'entrées que l'alternateur comporte de phases, chacune des phases étant reliée ou à relier en série avec une entrée correspondante de l'un des redresseurs et avec une entrée correspondante de l'autre redresseur.

Le système de commutation est par exemple agencé pour relier entre elles les entrées de l'un des redresseurs lorsque le système de commutation est dans le deuxième état, l'autre redresseur délivrant alors une tension redressée sensiblement égale à la tension crête interphases de l'alternateur.

Les deux redresseurs peuvent présenter des sorties reliées en parallèle.

L'alternateur peut présenter un nombre quelconque de phases, supérieur ou égal à deux, étant par exemple biphasé, triphasé ou quadriphasé.

Le dispositif de production d'électricité est par exemple embarqué sur un véhicule.

L'invention a encore pour objet, selon un autre de ses aspects, un ensemble comportant :
- un moteur thermique,
- un dispositif de production d'électricité tel que défini plus haut.
- un ou plusieurs moteurs électriques, notamment d'un système de climatisation ou de réfrigération de véhicule, alimentés par le dispositif de production d'électricité.

Le moteur thermique est par exemple un moteur servant à la propulsion d'un véhicule, par exemple un moteur diesel.

Le moteur thermique peut encore être un moteur de groupe électrogène destiné à entraîner un alternateur avec une vitesse variable.

Le dispositif de production d'électricité peut comporter un onduleur qui convertit la tension redressée en une tension alternative à fréquence fixe.

La tension redressée en entrée de cet onduleur peut être délivrée par l'un des deux redresseurs.

Dans un autre exemple de mise en oeuvre de l'invention, la ou les entrées du second redresseur sont court-circuitées ou non, sans qu'il n'y ait de régulation de la tension, par commutation à une fréquence relativement élevée du ou des interrupteurs permettant de court-circuiter la ou les entrées du second redresseur, la tension redressée ne prenant que deux valeurs correspondant respectivement au redressement par phase et au redressement interphases.

Dans un autre exemple de mise en oeuvre de l'invention, le ou les interrupteurs sont commutés à une fréquence relativement élevée, de façon à réguler la tension redressée. La fréquence et/ou le rapport cyclique peuvent varier. Le ou les interrupteurs sont bidirectionnels.

Selon un autre de ses aspects, l'invention a pour objet un procédé d'alimentation d'un moteur, par exemple d'un système de réfrigération ou de climatisation d'un véhicule, au moyen d'un dispositif de production d'électricité tel que défini précédemment, dans lequel la tension redressée alimente le moteur sans l'intermédiaire d'une batterie.

Selon un autre de ses aspects, l'invention a pour objet un dispositif de production d'électricité comportant :
- un premier redresseur ayant une sortie et des entrées à relier à un alternateur,
- un deuxième redresseur ayant une sortie et des entrées à relier à l'alternateur, les sorties des premier et deuxième redresseur étant reliées en parallèle, les phases de l'alternateur étant à relier en série avec les entrées des premier et deuxième redresseurs,
- plusieurs interrupteurs reliant un point neutre et les entrées du deuxième redresseur,
- un dispositif de contrôle pour commander la commutation des interrupteurs de façon à réguler la tension redressée en sortie des redresseurs, le dispositif de contrôle étant agencé pour commander cycliquement les interrupteurs avec un retard prédéfini.

L'invention a encore pour objet, selon un autre de ses aspects, un procédé de régulation de la tension délivrée à un moteur électrique par un dispositif de redressement comportant des interrupteurs électroniques et deux redresseurs, dans lequel en fonction d'une valeur de tension de consigne prédéfinie ou réglable par un utilisateur, des angles de fermeture des interrupteurs électroniques sont déterminés, les interrupteurs étant commandés selon ces angles de fermeture de telle sorte que deux des entrées d'un redresseur soient court-circuitées cycliquement.

L'invention a pour objet, selon un autre de ses aspects, un procédé de régulation de la tension délivrée à un moteur électrique par un dispositif de redressement comportant deux redresseurs et/ou au moins un interrupteur électronique, en fonction d'une valeur de tension de consigne, procédé dans lequel un circuit de commutation est agencé pour court-circuiter toutes les entrées de l'un des redresseurs de manière à obtenir une tension redressée correspondant à la tension de consigne.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente de manière schématique un ensemble, embarqué ou non, équipé d'un dispositif de production d'électricité réalisé conformément à l'invention,
- la figure 2 illustre un exemple de réalisation du dispositif de production d'électricité,
- la figure 3 représente de manière détaillée un exemple de redresseur,
- les figures 4 et 5 représentent des exemples d'évolution de la tension redressée en fonction de la vitesse de rotation de l'alternateur,
- la figure 6 représente un exemple de dispositif de production d'électricité, selon l'art antérieur,
- la figure 7 représente un dispositif de production d'électricité selon l'art antérieur,
- la figure 8 représente un autre exemple de dispositif de production d'électricité selon l'art antérieur,
- la figure 9 représente un autre exemple de réalisation d'un dispositif de production d'électricité et,
- la figure 10 représente un exemple de séquence de commande des interrupteurs électroniques pouvant être mise en oeuvre dans l'exemple de la figure 9.

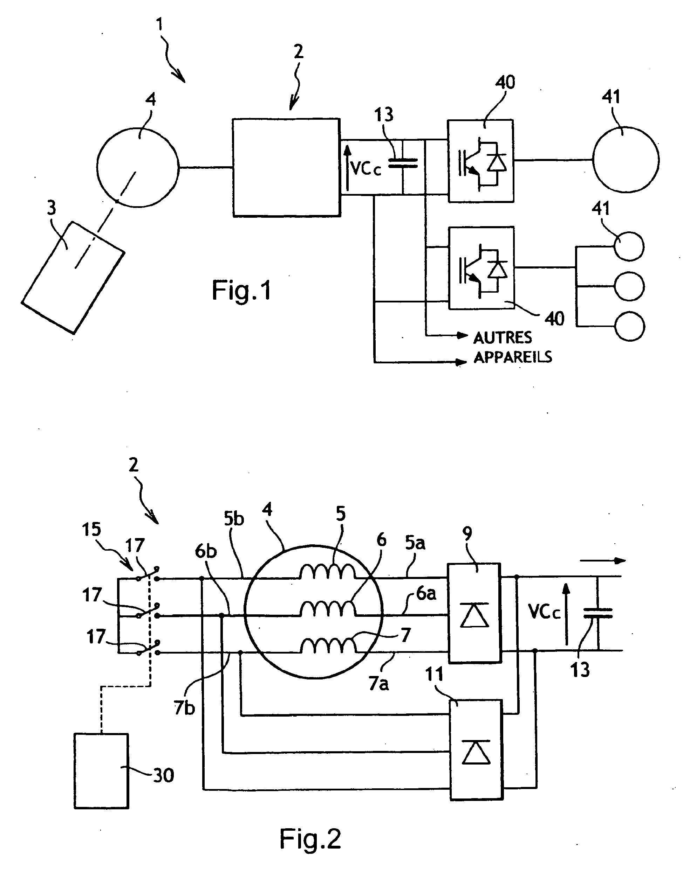

On a représenté à la figure 1 un ensemble 1 comportant d'une part un dispositif 2 de production d'électricité comportant un alternateur 4 et d'autre part un moteur thermique 3 pour entraîner l'alternateur.

L'ensemble 1 est par exemple embarqué sur un véhicule et le moteur thermique 3 peut servir à la propulsion de ce véhicule.

Le moteur thermique 3 peut encore ne pas être embarqué sur un véhicule.

Le moteur thermique 3, qu'il soit embarqué ou non, peut entraîner l'alternateur à une vitesse variable.

Par exemple, lorsque la charge de l'alternateur est faible, la vitesse de rotation du moteur 3 peut être relativement basse et lorsque la charge de l'alternateur croît, la vitesse du moteur 3 peut être augmentée.

Le dispositif 2 de production d'électricité délivre une tension redressée VCc qui est filtrée au moyen d'une capacité 13.

Selon les applications, l'ensemble 1 peut comporter un ou plusieurs onduleurs 40 destinés à transformer la tension redressée en une tension alternative à fréquence constante par exemple, pour alimenter un ou plusieurs moteurs électriques 41, par exemple des compresseurs d'un système de climatisation d'un camion ou de réfrigération d'un bus.

La tension redressée VCc peut également être délivrée à d'autres appareils, comme illustré à la figure 1, ces appareils étant autres que des batteries par exemple.

On a représenté à la figure 2 un exemple de dispositif 2 de production d'électricité selon l'invention.

Ce dispositif 2 comporte un alternateur triphasé 4 comportant trois phases 5, 6 et 7. L'alternateur 4 peut être à aimants permanents ou à rotor bobiné.

Le dispositif 2 comporte, dans l'exemple considéré, un système de redressement comprenant un premier redresseur 9 et un deuxième redresseur 11 dont la sortie est reliée en parallèle avec celle du premier redresseur 9.

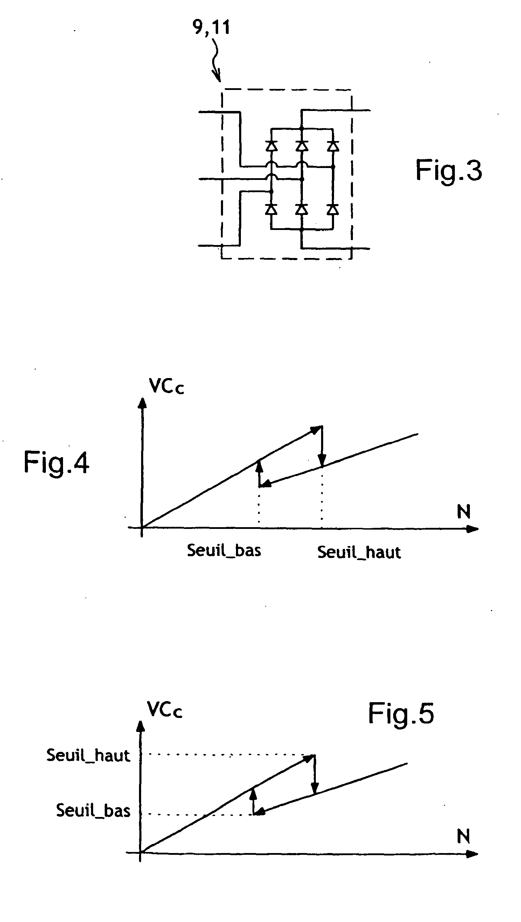

Chaque redresseur 9 ou 11 est par exemple un pont pleine onde, ayant la structure illustrée à la figure 3. En variante, chaque redresseur 9 ou 11 peut être de type « demi-onde ».

Les phases 5, 6 et 7 de l'alternateur 4 comportent des bornes respectives 5a, 6a et 7a d'une part et 5b, 6b et 7b d'autre part.

Les entrées du premier redresseur 9 sont reliées respectivement aux bornes 5a, 6a et 7a des phases 5, 6 et 7. Les autres bornes 5b, 6b et 7b sont reliées aux entrées respectives du deuxième redresseur 11.

Le dispositif 2 comporte également un système de commutation 15 qui, dans l'exemple de la figure 2, comporte des interrupteurs 17 commandés simultanément en ouverture ou fermeture et permettant de relier ou non les bornes 5b, 6b et 7b ensemble, de façon à créer un point neutre.

Dans l'exemple illustré, le système de commutation 15 est représenté dans un premier état où les bornes 5b, 6b et 7b ne sont pas reliées ensemble, les interrupteurs 17 étant ouverts.

Dans un deuxième état du système de commutation 15, non représenté, les interrupteurs 17 sont fermés et les bornes 5b, 6b, 7b sont reliées ensemble.

Lorsque les interrupteurs 17 sont ouverts, comme représenté à la figure 1, le redressement s'effectue par phase et la tension redressée est d'amplitude sensiblement égale à la tension crête par phase de l'alternateur.

Lorsque les interrupteurs 17 sont fermés, la tension redressée est d'amplitude sensiblement égale à la tension crête entre phases de l'alternateur.

Le rapport entre les deux tensions redressées est de 3^{½} pour une machine triphasée, mais serait sensiblement de 2^{½} pour un alternateur biphasé ou quadriphasé.

Le système de commutation 15 comporte un dispositif de contrôle 30 qui commande les interrupteurs 17 en ouverture ou en fermeture.

Le dispositif de contrôle 30 reçoit par exemple une information représentative de la tension VCc ou de la vitesse d'entraînement N de l'alternateur.

Le dispositif de contrôle 30 peut être agencé pour changer l'état des interrupteurs 17 en fonction de cette information, afin par exemple de diminuer l'amplitude de la plage de variation de la tension produite par le dispositif 2, lorsque la vitesse d'entraînement de l'alternateur varie.

Le dispositif de contrôle 30 comporte par exemple un microcontrôleur programmé pour assurer une fonction de comparaison de l'information représentative de la vitesse d'entraînement de l'alternateur avec au moins une valeur de consigne, et commander l'ouverture ou la fermeture des interrupteurs 17 selon une loi de commande préprogrammée.

Le dispositif de contrôle 30 est par exemple agencé de telle sorte que lorsque la vitesse de rotation N de l'alternateur croît tout en restant inférieure à un seuil haut, les interrupteurs 17 soient fermés, de telle sorte que le système de redressement redresse des tensions interphases, comme illustré à la figure 4.

Lorsque la vitesse de rotation N dépasse la valeur de seuil haut, les interrupteurs 17 sont ouverts et le système de redressement redresse une tension aux bornes des phases. L'ouverture des interrupteurs 17 s'accompagne d'un saut de la tension redressée.

Le dispositif de contrôle 30 peut être agencé de manière à créer une hystérésis et commander à nouveau la fermeture des interrupteurs 17 lorsque la vitesse de rotation N diminue et franchit un seuil bas inférieur au seuil haut.

Sur la figure 2, trois interrupteurs 17 ont été représentés mais dans une variante non illustrée, seuls deux interrupteurs 17 sont utilisés, reliés respectivement aux bornes 5b et 6b pour l'un et 6b et 7b pour l'autre.

Dans la variante illustrée à la figure 5, le dispositif de contrôle 30 commande la fermeture et l'ouverture des interrupteurs 17 en fonction de la tension redressée VCc.

Tant que la tension VCc est inférieure à un seuil haut, le système de redressement redresse des tensions interphases et lorsque la tension VCc franchit le seuil haut, le système de redressement redresse les tensions aux bornes des phases.

Ce redressement par phase est maintenu jusqu'à ce que la tension redressée VCc franchisse à la baisse un seuil bas, inférieur au seuil haut, comme illustré à la figure 5, ce qui crée une hystérésis.

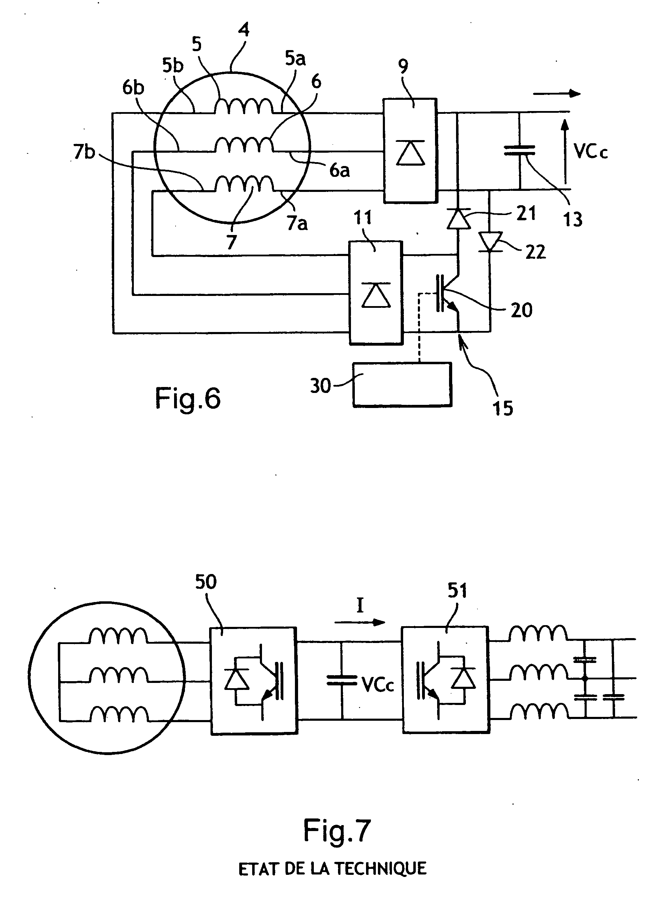

Dans le dispositif selon l'art antérieur illustré à la figure 6, les interrupteurs 17 ont été remplacés par un interrupteur 20 qui permet de court-circuiter ou non la sortie du deuxième redresseur 11.

Les phases 5, 6 et 7 de l'alternateur sont reliées en série avec les entrées des redresseurs 9 et 11.

La sortie du deuxième redresseur 11 est reliée à celle du premier redresseur par l'intermédiaire de deux diodes 21 et 22 qui permettent à l'interrupteur 20 de court-circuiter la sortie du second redresseur 11 sans court-circuiter celle du premier redresseur 9.

Lorsque l'interrupteur 20 est ouvert, c'est-à-dire lorsque la sortie du deuxième redresseur 11 n'est pas court-circuitée, le redressement s'effectue par phases et la tension redressée est d'amplitude sensiblement égale à la tension crête par phases de la machine.

Lorsque l'interrupteur 20 est fermé, c'est-à-dire lorsque la sortie du deuxième redresseur 11 est court-circuitée, le redressement s'effectue entre phases et la tension redressée est d'amplitude sensiblement égale à la tension crête entre phases de l' alternateur.

L'ouverture ou la fermeture de l'interrupteur 20 peut être commandée d'une façon similaire à ce qui a été décrit en référence aux figures 4 et 5, avec une hystérésis.

L'interrupteur 20 peut également être commuté en fermeture de façon intermittente à une fréquence relativement élevée, de manière à permettre au dispositif de contrôle 30 de réguler la tension VCc en modulant le rapport cyclique ou la fréquence de découpage.

L'interrupteur 20 est par exemple commuté de façon à réguler la tension VCc à une valeur sensiblement constante lorsque la fréquence de l'alternateur varie.

La fréquence de commutation de l'interrupteur 20 est par exemple supérieure au kHz, étant par exemple de quelques kHz.

En fonction du rapport cyclique appliqué à l'interrupteur 20, la tension VCc est par exemple régulée entre toute valeur intermédiaire comprise entre la tension redressée par phase et la tension redressée entre phases.

On a représenté à la figure 7 un dispositif de production d'électricité selon l'art antérieur, comportant un convertisseur 50 pour délivrer une tension redressée régulée et un onduleur 51 pour convertir cette tension redressée en une tension alternative de fréquence fixe.

Le dispositif de production d'électricité qui a été décrit précédemment en référence à la figure 6 peut être utile pour remplacer le convertisseur 50 et fournir une tension redressée VCc d'amplitude sensiblement constante, en régulant la tension au moyen de l'interrupteur 20 lorsque la fréquence de l'alternateur 4 varie.

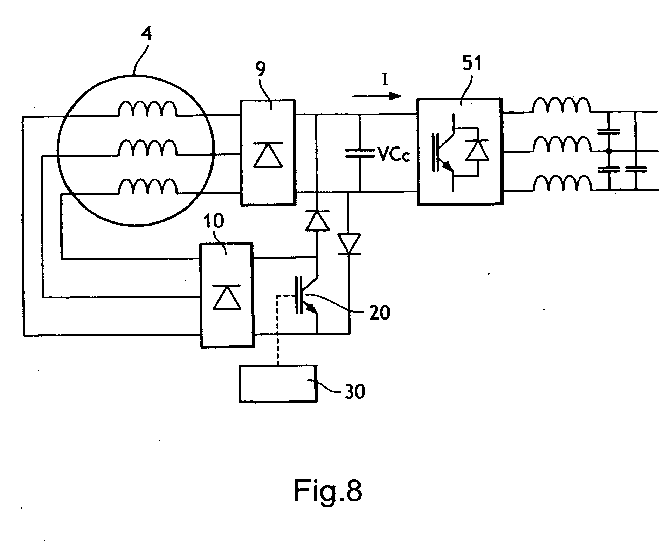

Dans une autre mise en oeuvre de l'art antérieur appliqué à la configuration de la figure 8, l'interrupteur 20 est soit ouvert soit fermé, selon une régulation avec hystérésis, de façon à procéder à un redressement entre phases ou par phase.

Selon l'invention, les interrupteurs 17 de l'exemple de la figure 2 sont commutés à une fréquence variable et/ou selon un rapport cyclique variable en fonction de la tension VCc souhaitée. Dans ce cas, les interrupteurs 17 qui sont utilisés sont des interrupteurs bidirectionnels capables de commuter à la fréquence considérée. Chaque interrupteur 17 est par exemple formé par deux associations d'un IGBT et d'une diode en série, montées tête bêche.

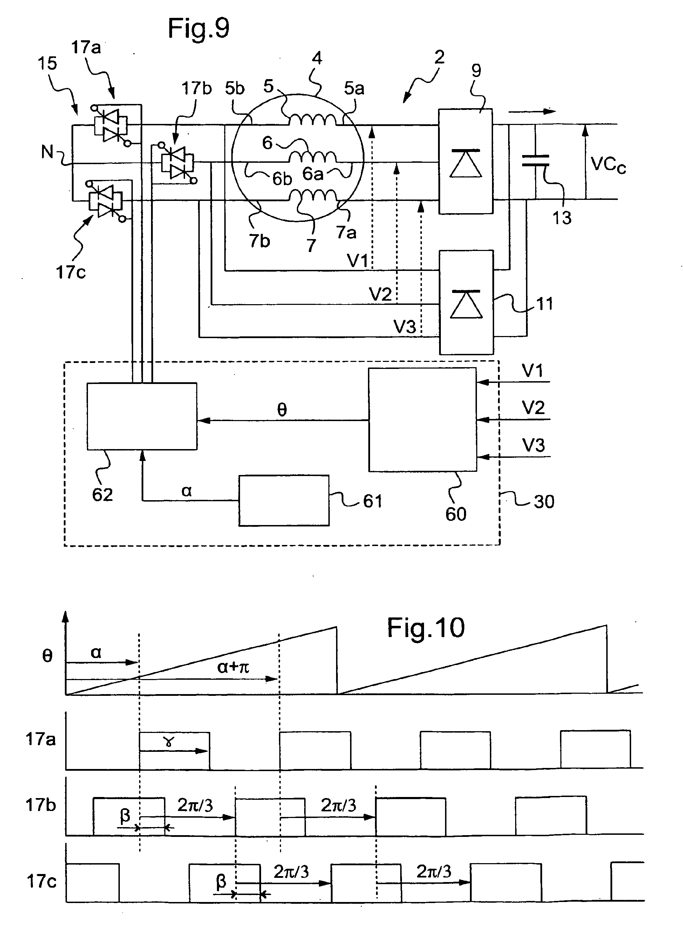

On a représenté à la figure 9 une variante du dispositif représenté à la figure 2. Le système de commutation 15 comporte dans cet exemple trois interrupteurs électroniques 17a, 17b et 17c se présentant par exemple chacun sous la forme d'un triac. Ces interrupteurs 17a, 17b et 17c peuvent être commandés indépendamment les uns des autres par un dispositif de contrôle 30 qui comporte un circuit de commande 62 des interrupteurs 17a à 17c, un circuit 60 destiné à former une boucle à verrouillage de phase et un circuit de contrôle 61 de l'angle d'amorçage des interrupteurs 17a à 17c.

Dans l'exemple considéré, les interrupteurs 17a à 17c sont respectivement montés électriquement en série entre un point neutre N et les bornes 5b à 7b de l'alternateur. Les entrées du deuxième redresseur 11 sont également reliées électriquement aux bornes 5b à 7b de l'alternateur. Les interrupteurs 17a à 17c sont commandés cycliquement en fermeture de manière à ce que les entrées du deuxième redresseur soient cycliquement court-circuitées, selon la séquence illustrée à la figure 10.

Le circuit 60 a, dans l'exemple considéré, pour entrée les trois tensions V1, V2 et V3 mesurées entre les bornes 5a et 5b pour la phase 5, les bornes 6a et 6b pour la phase 6 et les bornes 7a et 7b pour la phase 7. Le circuit 60 pourrait également recevoir en entrée des tensions interphases, par exemple.

Le circuit 60 permet d'extraire des tensions d'entrées un signal représentatif de l'angle électrique θ de l'une des tensions, par exemple V1. Ce signal est transmis au circuit de commande 62, comme illustré à la figure 9.

Le circuit de contrôle 61 permet de modifier la valeur de l'angle d'amorçage α, selon la tension en sortie VCc recherchée.

L'angle α est dans l'exemple considéré le retard à la fermeture de l'interrupteur 17a par rapport au passage par zéro de l'angle θ, comme illustré à la figure 10.

La fermeture de l'interrupteur 17a est également commandée avec un retard de α + π.

Les commandes de fermeture de l'interrupteur 17b s'effectuent avec des retards de α + 2π/3 et de α + π + 2π/3 et les commandes de fermeture de l'interrupteur 17c s'effectuent avec des retards α + 4π/3 et α + π + 4π/3.

La durée γ pendant laquelle chaque interrupteur 17a à 17c est passant est suffisante pour qu'il y ait recouvrement de deux interrupteurs pendant un angle β. Cette durée γ est, dans l'exemple représenté, inférieure à π-α.

En agissant sur la valeur de α, la tension moyenne en sortie du deuxième redresseur peut varier.

La valeur de l'angle α peut être modifiée en fonction par exemple d'une valeur de consigne de la tension de sortie VCc.

Le circuit 61 peut être agencé pour modifier la valeur α en fonction de la tension VCc afin d'effectuer une régulation de la tension VCc autour d'une valeur de consigne.

La valeur de consigne peut être par exemple prédéterminée lors de la fabrication du dispositif de contrôle 30 ou en variante cette valeur de consigne peut être modifiée par l'utilisateur, par exemple en agissant sur une interface telle que par exemple un clavier ou un sélecteur.

Le dispositif de contrôle 30 peut être réalisé de manière analogique et/ou avec des circuits numériques.

Le cas échéant, le dispositif de contrôle 30 peut recevoir en entrée une grandeur représentative de la vitesse de rotation de l'alternateur afin d'effectuer la régulation en fonction cette vitesse.

Un dispositif selon l'invention peut être utilisé pour obtenir une tension VCc sensiblement constante pour une plage de vitesse de rotation relativement élevée de l'alternateur, allant par exemple d'un facteur 1 à 1,7.

Un dispositif selon l'invention peut également être utilisé pour délivrer une tension non régulée mais avec une amplitude de variation plus faible que celle que l'on obtiendrait en l'absence de dispositif.

Dans une variante non illustrée, les interrupteurs 17a à 17c ne sont pas des triacs mais d'autres composants électroniques permettant de réaliser des interrupteurs bidirectionnels commandables.

L'alternateur a été représenté avec trois phases mais peut, dans des variantes, comporter plus ou moins de trois phases.

Dans l'exemple de la figure 9, on a dissocié pour faciliter la compréhension les circuits 60 à 62. Dans une variante, ces derniers sont regroupés au sein d'un même circuit, par exemple dans le cas où celui-ci comporte un microcontrôleur ou microprocesseur capable d'effectuer avec des composants annexes les diverses fonctions recherchées.

L'expression « comportant un » doit être comprise comme étant synonyme de « comportant au moins un », sauf si le contraire est spécifié.

## Revendications

1. Dispositif de production d'électricité comportant:
- un premier redresseur (9) ayant des entrées et une sortie,
- un deuxième redresseur (11) ayant des entrées et une sortie,
les entrées des premier et deuxième redresseurs étant à relier à un alternateur de telle sorte que les phases de l'alternateur soient reliées en série avec les entrées des premier et deuxième redresseurs, et les sorties des premier et deuxième redresseurs étant reliées en parallèle,
- une pluralité d'interrupteurs (17a; 17b ; 17c) chaque interrupteur (17a; 17b ; 17c) comportant un ou plusieurs composants électroniques, et les interrupteurs électroniques (17a, 17b, 17c) étant agencés pour court-circuter au moins deux des entrées du deuxième redresseur (11)
le dispositif étant **caractérisé par le fait qu'**il comporte un dispositif de contrôle (30) pour commander la commutation du ou des interrupteurs (17a; 17b; 17c) de façon à réguler la tension redressée (VCc) délivrée par le dispositif, le dispositif de contrôle (30) étant agencé pour commander l'angle de fermeture des interrupteurs électroniques (17a ; 17b; 17c) en fonction de l'angle électrique (9) d'une des tensions aux bornes d'une phase de l'alternateur.

2. Dispositif selon l'une quelconque des revendications précédentes, comportant l'alternateur (4), les entrées des premier et deuxième redresseurs étant reliées à l'alternateur.

3. Dispositif selon l'une quelconque des revendications précédentes, le dispositif de contrôle (30) comportant une boucle à verrouillage de phase (62).

4. Dispositif selon l'une quelconque des revendications précédentes, dans lequel le dispositif de contrôle (30) est agencé pour comparer une information représentative de la vitesse d'entraînement (N) de l'alternateur à au moins une valeur de consigne.

5. Dispositif selon l'une quelconque des revendications précédentes, dans lequel le dispositif de contrôle (30) est agencé pour comparer une information représentative de la tension redressée (VCc) à au moins une valeur de consigne.

6. Dispositif selon l'une quelconque des revendications précédentes, dans lequel l'alternateur est triphasé.

7. Dispositif selon l'une quelconque des revendications précédentes, dans lequel le dispositif de production d'électricité est agencé pour être embarqué sur un véhicule.

8. Dispositif selon l'une quelconque des revendications précédentes, comportant une capacité (13) en parallèle avec la sortie du premier redresseur.

9. Ensemble (1) comportant :
- un moteur thermique (3),
- un dispositif (2) de production d'électricité tel que défini dans l'une quelconque des revendications précédentes,
- un ou plusieurs moteurs électriques, notamment d'un système de climatisation ou de réfrigération de véhicules, alimentés par le dispositif de production d'électricité.

10. Ensemble selon la revendication 9, dans lequel le moteur thermique (3) est un moteur servant à la propulsion d'un véhicule.

11. Ensemble selon la revendication 9, dans lequel le moteur thermique (3) est un moteur de groupe électrogène destiné à entraîner un alternateur avec une vitesse variable.

12. Procédé d'alimentation d'un moteur au moyen d'un dispositif de production d'électricité selon l'une quelconque des revendications 1 à 8, dans lequel la tension redressée alimente le moteur sans l'intermédiaire d'une batterie.

13. Procédé selon la revendication 12, le moteur appartenant à un système de réfrigération ou de climatisation d'un véhicule.

## Claims

1. An electricity production circuit comprising:
· a first rectifier (9) comprising inputs and an output; · a second rectifier (11) comprising inputs and an output,
the inputs of the first and second rectifiers being for connection to an alternator so that phases of the alternator are connected in series with the inputs of the first and second rectifiers; and the outputs of the first and second rectifiers being connected in parallel,
· several switches (17a; 17b; 17c), each switch (17a; 17b; 17c) comprising one or more electronic components and the electronic switches (17a, 17b, 17c) being configured for short-circuiting at least two of the inputs of the second rectifier (11).
the circuit being **characterized by** the fact that it comprises a control unit (30) for controlling the switching of the at least one switch (17a; 17b; 17c) so as to regulate the rectified voltage (VCc) delivered by the circuit, the control unit (30) being configured to control the triggering angle of the electronic switches (17a; 17b; 17c) as a function of the electrical angle (θ) of one of the voltages across the terminals of a phase of the alternator.

2. A circuit according to claim 1, including the alternator (4), the inputs of the first and second rectifiers being connected to the alternator.

3. A circuit according to any preceding claim, the control unit (30) comprising a phase-locked loop (62).

4. A circuit according to any preceding claim, in which the control unit (30) is arranged to compare information representative of the drive speed (N) of the alternator with at least one reference value.

5. A circuit according to any preceding claim, in which the control unit (30) is arranged to compare information representative of the rectified voltage (VCc) with at least one reference value.

6. A circuit according to any preceding claim, in which the alternator is a three-phase alternator.

7. A circuit according to any preceding claim, in which the electricity production circuit is arranged for being mounted on board a vehicle.

8. A circuit according to any preceding claim, including a capacitor connected in parallel with the output of the first rectified.

9. An assembly (1) comprising:
· an engine (3);
· an electricity production circuit (2) as defined in any preceding claim; and
· at least one electric motor., notably of an air-conditioning system or a refrigeration system of vehicles, powered by the electricity production circuit.

10. An assembly according to claim 9, in which the engine is an engine configured for propelling a vehicle.

11. An assembly according to claim 9, in which the engine is configured for driving an alternator at a variable speed.

12. A method for powering a motor, by means of an electricity production circuit as defined in any one of claims 1 to 8, in which method the rectified voltage powers the motor without an intermediate battery.

13. The method of claim 12, the motor being a refrigeration system or an air-conditionning system of a vehicle.

## Patentansprüche

1. Vorrichtung zur Stromerzeugung, umfassend:
einen ersten Gleichrichter (9) mit Eingängen und einem Ausgang,
einen zweiten Gleichrichter (11) mit Eingängen und einem Ausgang,
wobei die Eingänge des ersten und des zweiten Gleichrichters mit einem Wechselstromerzeuger in einer Weise zu verschalten sind, dass die Phasen des Wechselstromerzeugers mit den Eingängen des ersten und des zweiten Gleichrichters in Reihe geschaltet sind und die Ausgänge des ersten und des zweiten Gleichrichters parallel geschaltet sind,
mehrere Schalter (17a; 17b; 17c), wobei jeder Schalter (17a; 17b; 17c) eine oder mehrere elektronische Komponenten aufweist und die elektronischen Schalter (17a, 17b, 17c) zum Kurzschließen von wenigstens zweien der Eingänge des zweiten Gleichrichters (11) ausgelegt sind,
wobei die Vorrichtung **dadurch gekennzeichnet ist, dass** sie eine Steuervorrichtung (30) zum Steuern des Schaltens des oder der Schalter (17a; 17b; 17c) derart aufweist, dass sie die von der Vorrichtung gelieferte gleichgerichtete Spannung (VCc) regeln, wobei die Steuervorrichtung (30) zum Steuern des Schließwinkels der elektronischen Schalter (17a; 17b; 17c) in Abhängigkeit vom elektrischen Winkel (θ) von einer der Klemmenspannungen von einer Phase des Wechselstromerzeugers ausgelegt ist.

2. Vorrichtung nach dem vorhergehenden Anspruch, umfassend den Wechselstromerzeuger (4), wobei die Eingänge des ersten und des zweiten Gleichrichters mit dem Wechselstromerzeuger verschaltet sind.

3. Vorrichtung nach einem der vorhergehenden Ansprüche, wobei die Steuervorrichtung (30) eine Phasenregelschleife umfasst.

4. Vorrichtung nach einem der vorhergehenden Ansprüche, in der die Steuervorrichtung (30) zum Vergleichen einer für die Antriebszahl (N) des Wechselstromerzeugers repräsentativen Information mit mindestens einem Einstellwert ausgelegt ist.

5. Vorrichtung nach einem der vorhergehenden Ansprüche, in der die Steuervorrichtung (30) zum Vergleichen einer für die gleichgerichtete Spannung (VCc) repräsentativen Information mit mindestens einem Einstellwert ausgelegt ist.

6. Vorrichtung nach einem der vorhergehenden Ansprüche, in der der Wechselstromerzeuger dreiphasig ist.

7. Vorrichtung nach einem der vorhergehenden Ansprüche, in der die Stromerzeugungsvorrichtung dazu ausgelegt ist, auf einem Fahrzeug angebracht zu werden.

8. Vorrichtung nach einem der vorhergehenden Ansprüche, umfassend einen Kondensator (13) parallel zum Ausgang des ersten Gleichrichters

9. Anordnung (1) umfassend:
einen thermischen Motor (3),
eine Vorrichtung (2) zur Stromerzeugung nach einem der vorhergehenden Ansprüche,
einen oder mehrere Elektromotoren, insbesondere von einem System zur Klimatisierung oder zur Kühlung von Fahrzeugen, die von der Vorrichtung zur Stromerzeugung versorgt werden.

10. Anordnung nach Anspruch 9, in der der thermische Motor (3) ein zum Antrieb eines Fahrzeugs dienender Motor ist.

11. Anordnung nach Anspruch 9, in der der thermische Motor (3) ein Motor eines Stromaggregats zum Antreiben eines Wechselstromerzeugers mit einer variablen Drehzahl ist.

12. Verfahren zur Versorgung eines Motors mittels einer Vorrichtung zur Stromerzeugung nach einem der Ansprüche 1 bis 8, in dem die gleichgerichtete Spannung den Motor ohne eine Batterie versorgt.

13. Verfahren nach Anspruch 12, wobei der Motor zu einem System zur Kühlung oder zur Klimatisierung eines Fahrzeugs gehört.
